# EUROPEAN PATENT SPECIFICATION

(11) **EP 4 286 608 B1**
(45) Date of publication and mention of the grant of the patent: **12.08.2026**
(21) Application number: 21923134.7
(22) Date of filing: 03.12.2021
(51) Int. Cl.: E02F 9/26

(54) **DISPLAY DEVICE AND WORK MACHINE**
ANZEIGEVORRICHTUNG UND ARBEITSMASCHINE
DISPOSITIF D'AFFICHAGE ET MACHINE DE TRAVAIL

(30) Priority: 29.01.2021 JP 2021012773
(43) Date of publication of application: 06.12.2023
(73) Proprietor: Yanmar Holdings Co., Ltd., Osaka-shi, Osaka 530-8311 (JP)
(72) Inventor: SUZUKI, Shogo, Osaka-shi, Osaka 530-8311 (JP); KAWAGUCHI, Daisuke, Chikugo-shi, Fukuoka 833-0055 (JP); TAMURA, Kazuki, Chikugo-shi, Fukuoka 833-0055 (JP)
(74) Representative: Sekiguchi, Kazuya
(86) International application number: PCT/JP2021/044527
(87) International publication number: WO 2022/163129

(56) References cited:
- JP-A- 2007 327 332
- JP-A- 2008 127 129
- JP-A- 2017 037 128
- JP-A- 2017 149 392
- JP-A- 2020 042 851
- JP-A- H06 116 988

## Description

### TECHNICAL FIELD

The present invention relates to a display device included in a work machine such as a construction machine and to a work machine including the display device.

### BACKGROUND ART

Conventionally, work machines such as construction machines include a display device that displays various information. Moreover, the work machines include consumables that require maintenance depending on use. The work machines can detect arrival of a maintenance time of a consumable by monitoring a cumulative time of use of the consumable and report the arrival of the maintenance time of the consumable to a worker by the display device.

For example, a display device of a work machine disclosed in Patent Literature 1 displays a maintenance mark on a display screen of the display device when a maintenance time arrives for any of a plurality of parts that requires regular maintenance. Patent Literature 2 discloses a maintenance information management device comprising a storage means for accumulating and storing representative values representing the loads of the consumable parts detected while specified operations are performed and a deriving means for deriving the information on the maintenance times of the consumable parts according to the representative values of load accumulated and stored in the storage means.

### CITATION LIST

### Patent Literature

Patent Literature 1: Japanese Unexamined Patent Application Publication No. 2002-327467
Patent Literature 2: JP 2008-127129 A

### DISCLOSURE OF INVENTION

### PROBLEMS TO BE SOLVED BY THE INVENTION

In conventional work machines, when a consumable is maintained, a cumulative time of use of the consumable must be measured from the beginning, and thus, a stored cumulative time must be reset. However, because the work machines have a plurality of functions and a plurality of setting means for setting the respective functions, it is difficult to intuitively understand an operation method of a setting means for resetting usage information such as the cumulative time of use of the consumable.

It is an object of the present invention to provide a display device that allows intuitive and easy understanding of an operation method for resetting usage information of a consumable of a work machine and a work machine including the display device.

### MEANS FOR SOLVING THE PROBLEMS

In order to solve the above-described problem, a display device of the present invention is a display device of a work machine, including: a storage means that stores a cumulative time of use with respect to a consumable of the work machine that requires maintenance depending on use; a notification means that provides a notification of arrival of a maintenance time of the consumable on the basis of the cumulative time; a plurality of function setting means for respectively setting a plurality of functions of the work machine; and a selection means for selecting any of the plurality of function setting means, in which the plurality of function setting means has a reset setting means for resetting the cumulative time, the selection means performs visual recognition display that allows visual recognition of a procedure leading to the reset setting means regarding the consumable for which the maintenance time has arrived, and the selection means cancels the visual recognition display after resetting the cumulative time by the reset setting means.

In the above-described display device of the present invention, the selection means hierarchizes the procedure leading to the reset setting means.

In the above-described display device of the present invention, the selection means performs the visual recognition display for each hierarchy level.

In the above-described display device of the present invention, the reset setting means is provided for each type of a plurality of the consumables at the lowest layer of the selection means.

In the above-described display device of the present invention, the selection means includes identification notations identifying options and displays an identification notation of an option leading to the reset setting means in a different color from another option, as the visual recognition display.

In the above-described display device of the present invention, the selection means cancels the visual recognition display after resetting the cumulative time by the reset setting means.

In order to solve the above-described problem, a work machine of the present invention includes any one of the above-described display devices.

### EFFECT OF THE INVENTION

According to the present invention, a display device that allows intuitive and easy understanding of an operation method for resetting usage information of a consumable of a work machine and a work machine including the display device are provided.

### BRIEF DESCRIPTION OF DRAWINGS

FIG. 1 is a block diagram of a work machine according to an embodiment of the present invention.
FIG. 2 is a plan view illustrating an example of a home screen in a display device of the work machine according to the embodiment of the present invention.
FIG. 3 is a plan view illustrating an example of a first selection screen in the display device of the work machine according to the embodiment of the present invention.
FIG. 4 is a plan view illustrating an example of a second selection screen in the display device of the work machine according to the embodiment of the present invention.
FIG. 5 is a plan view illustrating an example of a third selection screen in the display device of the work machine according to the embodiment of the present invention.
FIG. 6 is a plan view illustrating an example of a reset setting screen that is a function setting screen in the display device of the work machine according to the embodiment of the present invention.

### DESCRIPTION OF EMBODIMENTS

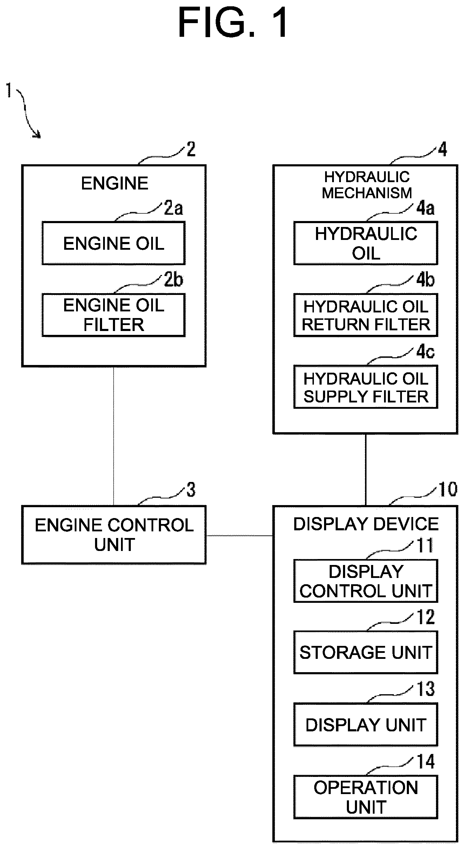

A work machine 1 and a display device 10 according to the embodiment of the present invention will be described with reference to the drawings. FIG. 1 is a block diagram indicating the work machine 1 including the display device 10 of the present embodiment.

The work machine 1 is, for example, a construction machine (for example, a hydraulic excavator) that is used at construction sites, demolition sites, mines, and the like and performs work such as civil work and construction work in response to a worker's operation. The work machine 1 includes an engine 2, an engine control unit 3, a hydraulic mechanism 4, and the display device 10, for example.

The engine 2 transmits power to various parts of the work machine 1. The engine 2 uses a lubricating engine oil 2a to facilitate the operation of various parts of the engine 2. Moreover, an engine oil filter 2b that removes impurities from the engine oil 2a is provided in the engine 2. The engine oil 2a and the engine oil filter 2b are consumables whose lives are shortened depending on the use (cumulative times of use) of the work machine 1 (engine 2) and are maintained by being replaced.

The engine control unit 3 controls the operation of the engine 2 and is configured with an engine ECU or the like. Moreover, the engine control unit 3 measures a rotation speed of the engine 2 and outputs the rotation speed to the display device 10.

The hydraulic mechanism 4 performs work such as civil work and construction work and has hydraulic components (not illustrated) such as booms, arms, and buckets, and hydraulic actuators (not illustrated) that drive the hydraulic components. The hydraulic mechanism 4 has a hydraulic pump (not illustrated) that pressurizes a hydraulic oil 4a by the power generated in the engine 2 and drives the hydraulic actuators using the pressurized hydraulic oil 4a as a power transmission medium.

Moreover, the hydraulic mechanism 4 is configured to return the hydraulic oil 4a from the hydraulic actuators to a hydraulic tank (not illustrated) via a return flow path (not illustrated), and a hydraulic oil return filter 4b that removes impurities from the hydraulic oil 4a is provided in the return flow path. The hydraulic mechanism 4 is configured to supply the hydraulic oil 4a from the hydraulic tank to the hydraulic pump via a supply flow path (not illustrated), and a hydraulic oil supply filter 4c that removes impurities from the hydraulic oil 4a is provided in the supply flow path. The hydraulic oil 4a, the hydraulic oil return filter 4b, and the hydraulic oil supply filter 4c are consumables whose lives are shortened depending on the use (cumulative times of use) of the work machine 1 (hydraulic mechanism 4) and are maintained by being replaced.

The hydraulic mechanism 4 detects the drive of various parts of the hydraulic mechanism 4, for example, the drive of the hydraulic actuators and the drive of the return flow path and the supply flow path, and outputs, as the detection result, an on or off drive signal to the display device 10, for example.

The display device 10 displays various information of the work machine 1. The display device 10 includes a display control unit 11, a storage unit 12, a display unit 13, and an operation unit 14, for example.

The display control unit 11 is configured with a monitor ECU or the like and controls the operation of various parts of the display device 10. The storage unit 12 is a storage means configured with a storage medium such as a ROM and a RAM and stores various information of the display device 10. The storage unit 12 stores in advance the lives (lifetimes of use) of various consumables of the work machine 1, for example. Moreover, the storage unit 12 sequentially stores usage information such as a cumulative time of use of each consumable of the work machine 1.

The display unit 13 is configured with, for example, a liquid crystal monitor or the like, and displays a screen in response to the control by the display control unit 11. The operation unit 14 is configured with, for example, a plurality of function keys and accepts an operation corresponding to the screen displayed by the display control unit 11.

The display control unit 11 controls the display unit 13 and makes the display unit 13 display various screens. The display control unit 11 switches the various screens to be displayed on the display unit 13 in response to the operation of the operation unit 14. Moreover, the display control unit 11 displays on the various screens of the display unit 13 a menu bar 13a having a plurality of selection items and an alarm notation column 13b that reports an abnormality occurred in the work machine 1. The plurality of function keys of the operation unit 14 are provided corresponding to the plurality of selection items of the menu bar 13a, respectively, and the display control unit 11 accepts a selection of each of the selection items in response to the operation of each of the function keys.

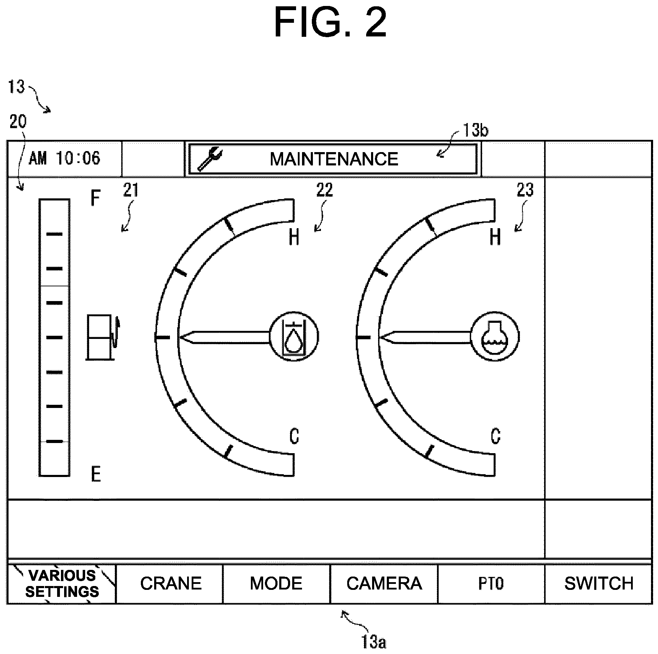

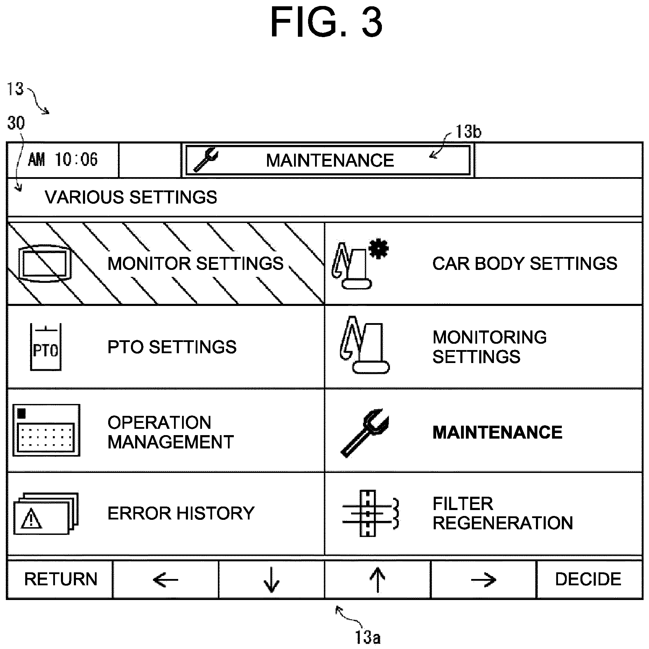

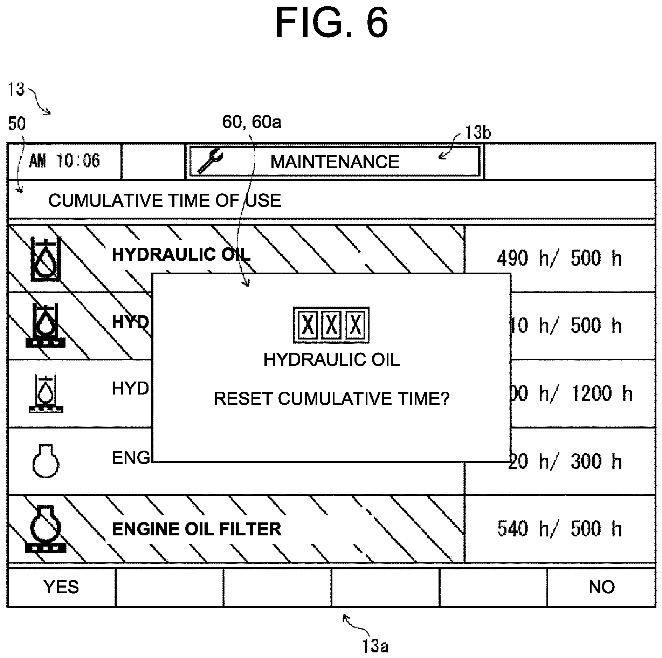

For example, when the work machine 1 (engine 2) is started, the display control unit 11 displays on the display unit 13 a home screen 20 as a basic screen (refer to FIG. 2). Moreover, the display control unit 11 displays on the display unit 13 a function setting screen 60 having a plurality of function setting means for setting a plurality of functions of the work machine 1 (refer to FIG. 6). For example, the display control unit 11 displays on the display unit 13 a reset setting screen 60a, as the function setting screen 60, having a reset setting means for resetting usage information such as a cumulative time of each consumable of the work machine 1 as a function setting means. The home screen 20 has a selection means for making a selection leading to any of the plurality of function setting means. Furthermore, the display control unit 11 displays on the display unit 13, between the home screen 20 and the function setting screen 60, selection screens 30, 40, and 50 each having a selection means for making a selection leading to any of the plurality of function setting means (refer to FIG. 3, FIG. 4, and FIG. 5). In other words, the display control unit 11 and the display unit 13 function as the function setting means and the selection means.

Moreover, the display control unit 11 manages the plurality of functions of the work machine 1 in a tree-like hierarchy. For example, the display control unit 11 classifies the plurality of functions of the work machine 1 into first layer groups each of which is a broad type (hereinafter referred to as first layer type). Moreover, the display control unit 11 classifies each of the first layer groups into second layer groups each of which is a more detailed type than the first layer type (hereinafter referred to as second layer type). Furthermore, the display control unit 11 classifies each of the second layer groups into third layer groups each of which is a more detailed type than the second layer type (hereinafter referred to as third layer type). The display control unit 11 classifies each of the third layer groups into types each of which is more detailed than the third layer type (hereinafter referred to as function type), thereby classifying each of the third layer groups into the above-described plurality of functions. The display control unit 11 accepts selections of the first layer groups, the second layer groups, and the third layer groups by the selection means of the home screen 20, the selection screens 30, 40, and 50, and the function setting screen 60. In other words, the display control unit 11 configures the selection means by hierarchizing a procedure leading to the function setting means.

In the home screen 20, the display control unit 11 displays a fuel gauge 21, a hydraulic oil temperature gauge 22, a radiator water temperature gauge 23, a work status notation (not illustrated), various alarm lamps (not illustrated), and the like. Moreover, in the home screen 20, the display control unit 11 displays, as the selection means leading to any of the plurality of function setting means, the above-described respective first layer groups in the menu bar 13a such that the first layer groups are selectable.

For example, the display control unit 11 classifies the plurality of functions of the work machine 1 into the respective first layer groups: "various settings," "crane," "mode," "camera," and "PTO" and displays the names of the respective first layer groups as options in the respective selection items of the menu bar 13a. Accordingly, the display control unit 11 accepts the selection of the first layer group in response to the operation of the operation unit 14. The selection of the first layer group "various settings" displayed in the menu bar 13a of the home screen 20 is the selection means leading to the reset setting means.

When the first layer group is selected in the menu bar 13a of the home screen 20, the display control unit 11 displays a first selection screen 30 regarding the selected first layer group on the display unit 13. In this case, in the first selection screen 30, the display control unit 11 displays, as the selection means leading to any of the plurality of function setting means, the respective second layer groups classified from the first layer group such that the second layer groups are selectable.

For example, the display control unit 11 classifies the first layer group "various settings" into the respective second layer groups: "monitor settings," "car body settings," "PTO settings," "monitoring settings," "operation management," "maintenance," "error history," and "filter regeneration" and displays, as shown in FIG. 3, the names of the respective second layer groups as options on the first selection screen 30. Moreover, the display control unit 11 may display on the first selection screen 30 identification notations such as icons identifying the respective second layer groups. In the menu bar 13a of the first selection screen 30, a selection item for returning to the home screen 20 and selection items for moving a cursor to select any of the second layer groups and deciding to select any of the second layer groups are displayed. The cursor indicating a candidate for the selection of the second layer groups is displayed differently from other options and is hatched in FIG. 3. Accordingly, the display control unit 11 accepts the selection of the second layer group in response to the operation of the operation unit 14. The selection of the second layer group "maintenance" displayed in the first selection screen 30 is the selection means leading to the reset setting means.

When the second layer group is selected in the first selection screen 30, the display control unit 11 displays a second selection screen 40 regarding the selected second layer group on the display unit 13. In this case, in the second selection screen 40, the display control unit 11 displays, as the selection means leading to any of the plurality of function setting means, the respective third layer groups classified from the second layer group such that the third layer groups are selectable.

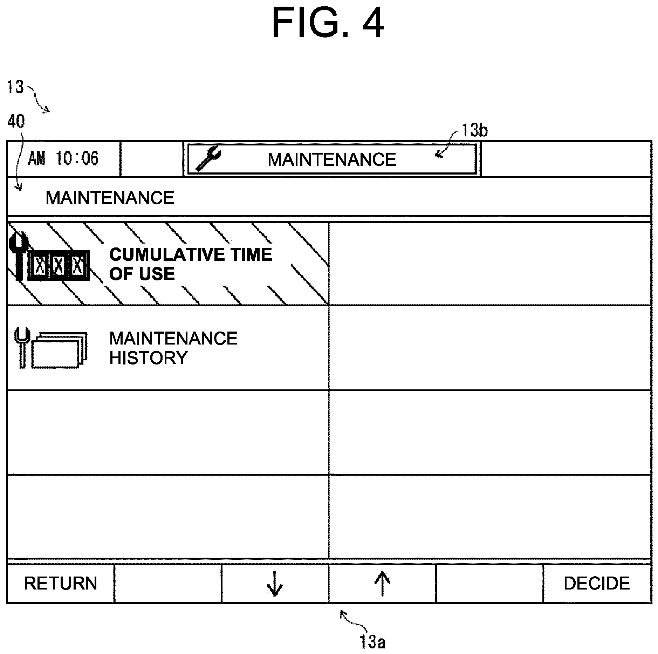

For example, the display control unit 11 classifies the second layer group "maintenance" into the respective third layer groups: "cumulative time of use" and "maintenance history" and displays, as shown in FIG. 4, the names of the respective third layer groups as options on the second selection screen 40. Moreover, the display control unit 11 may display on the second selection screen 40 identification notations such as icons identifying the respective third layer groups. In the menu bar 13a of the second selection screen 40, a selection item for returning to the first selection screen 30 and selection items for moving a cursor to select any of the third layer groups and deciding to select any of the third layer groups are displayed. The cursor indicating a candidate for the selection of the third layer groups is displayed differently from another option and is hatched in FIG. 4. Accordingly, the display control unit 11 accepts the selection of the third layer group in response to the operation of the operation unit 14. The selection of the third layer group "cumulative time of use" displayed in the second selection screen 40 is the selection means leading to the reset setting means.

When the third layer group is selected in the second selection screen 40, the display control unit 11 displays a third selection screen 50 regarding the selected third layer group on the display unit 13. In this case, in the third selection screen 50, the display control unit 11 displays, as the selection means leading to any of the plurality of function setting means, items for setting the respective functions (hereinafter referred to as function setting items) classified from the third layer group such that the items are selectable.

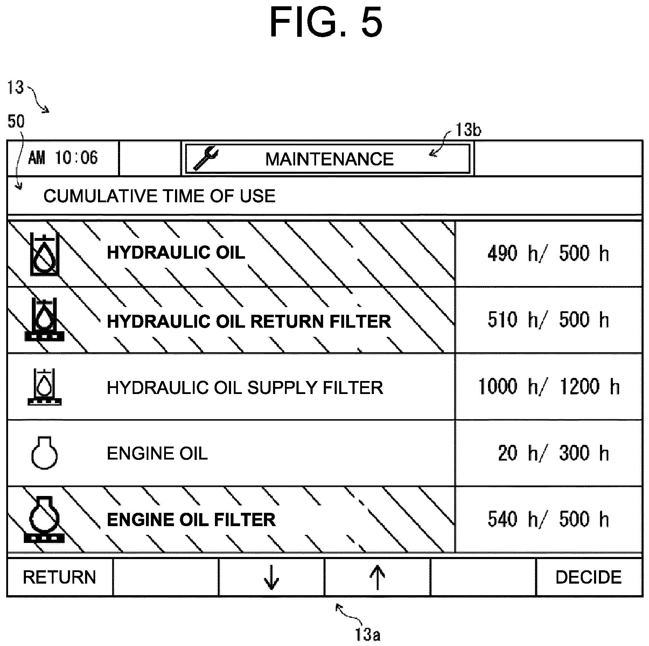

For example, the display control unit 11 classifies the third layer group "cumulative time of use" into the respective function setting items: "hydraulic oil," "hydraulic oil return filter," "hydraulic oil supply filter," "engine oil," and "engine oil filter" and displays, as shown in FIG. 5, the names of the respective function setting items as options on the third selection screen 50. The respective function setting items: "hydraulic oil," "hydraulic oil return filter," "hydraulic oil supply filter," "engine oil," and "engine oil filter" are items of functions for resetting a cumulative time of use of each consumable of the work machine 1. In the third selection screen 50 of the third layer group "cumulative time of use," a lifetime of use and a cumulative time are written together for each of "hydraulic oil," "hydraulic oil return filter," "hydraulic oil supply filter," "engine oil," and "engine oil filter" which are consumables of the work machine 1. Moreover, the display control unit 11 may display on the third selection screen 50 identification notations such as icons identifying the respective consumables. In the menu bar 13a of the third selection screen 50, a selection item for returning to the second selection screen 40 and selection items for moving a cursor to select any of the function setting items and deciding to select any of the function setting items are displayed. The cursor indicating a candidate for the selection of the function setting items is displayed differently from other options and is hatched in FIG. 5. Accordingly, the display control unit 11 accepts the selection of the function setting items in response to the operation of the operation unit 14. The selection of the respective function setting items displayed in the third selection screen 50 is the selection means leading to the reset setting means. In other words, the reset setting means is provided for each type of consumables at the lowest layer of the selection means.

When the function setting items are selected in the third selection screen 50, the display control unit 11 displays on the display unit 13 the function setting screen 60 having the function setting means for setting the functions of the selected function setting items. For example, when any of the function setting items are selected in the third selection screen 50 of the third layer group "cumulative time of use," the display control unit 11 displays on the display unit 13, as the function setting screen 60, the reset setting screen 60a that can set whether to reset the cumulative time of use of the consumable corresponding to the selected function setting item, as shown in FIG. 6. In the menu bar 13a of the reset setting screen 60a, a selection item for selecting whether to reset the cumulative time is displayed. When the reset of the cumulative time is selected in the reset setting screen 60a, the display control unit 11 resets the cumulative time stored in the storage unit 12 with respect to the corresponding consumable, that is, sets the cumulative time to 0.

Furthermore, as described above, the display control unit 11 acquires and sequentially stores in the storage unit 12 usage information such as cumulative times of use of consumables of the engine 2 (for example, engine oil 2a, engine oil filter 2b) and cumulative times of use of consumables of the hydraulic mechanism 4 (for example, hydraulic oil 4a, hydraulic oil return filter 4b, hydraulic oil supply filter 4c). The display control unit 11 updates the cumulative times of the consumables stored in the storage unit 12 depending on the use of the engine 2 and the hydraulic mechanism 4.

For example, the display control unit 11 inputs data of the rotation speed of the engine 2 from the engine control unit 3, starts a measurement of an operating time of the engine 2 when the rotation speed exceeds a predetermined rotation speed threshold, and finishes the measurement of the operating time of the engine 2 when the rotation speed becomes the rotation speed threshold or less. The display control unit 11 adds the measured operating time of the engine 2 to the cumulative times of use of the consumables of the engine 2 (for example, engine oil 2a, engine oil filter 2b) and stores the obtained cumulative times in the storage unit 12.

Moreover, the display control unit 11 inputs the drive signal from the hydraulic mechanism 4 and measures an operating time of the hydraulic mechanism 4 while the drive signal is on. The display control unit 11 adds the measured operating time of the hydraulic mechanism 4 to the cumulative times of use of the consumables of the hydraulic mechanism 4 (for example, hydraulic oil 4a, hydraulic oil return filter 4b, hydraulic oil supply filter 4c) and stores the obtained cumulative times in the storage unit 12.

Moreover, on the basis of the cumulative time of use and the lifetime of use of each of the consumables of the engine 2 and the hydraulic mechanism 4, the display control unit 11 detects arrival of a maintenance time of the consumable when the cumulative time reaches the lifetime of use or when a difference between the cumulative time and the lifetime of use becomes a predetermined life threshold or less. When detecting the arrival of the maintenance time of the consumable, the display control unit 11 functions as a notification means for providing a notification of the arrival of the maintenance time. For example, the display control unit 11 as the notification means provides a notification of the arrival of the maintenance time by displaying a maintenance notation such as a text "maintenance" or another maintenance-prompting image in the alarm notation column 13b to be displayed on the display unit 13. The display control unit 11 may display in the alarm notation column 13b an identification notation such as a name or an icon of the consumable for which the maintenance time has arrived.

Incidentally, when the display device 10 has provided the notification of the arrival of the maintenance time of the consumable to the home screen 20 as described above, a worker who has visually recognized the notification shuts down the engine 2 and performs maintenance such as a replacement of the consumable of the work machine 1. If the cumulative time stored in the storage unit 12 is not reset when the worker then operates the engine 2 again and the display device 10 displays the home screen 20, the display control unit 11 would detect the arrival of the maintenance time of the consumable on the basis of the relationship between the cumulative time and the lifetime of use and provide the notification of the arrival of the maintenance time of the consumable to the home screen 20. In order to prompt the worker to reset the cumulative time, when providing the notification of the arrival of the maintenance time, the display device 10 performs, by the selection means in the home screen 20, the first selection screen 30, the second selection screen 40, and the third selection screen 50 described above, visual recognition display that allows visual recognition of a procedure leading to the reset setting means regarding the consumable for which the maintenance time has arrived.

In this case, as the visual recognition display, the display control unit 11 displays a notation related to the selection means leading to the reset setting means differently from other notations in the home screen 20, the first selection screen 30, the second selection screen 40, and the third selection screen 50. For example, the display control unit 11 displays the name or the identification notation of the selection item of the first layer group "various settings" displayed in the menu bar 13a of the home screen 20 in a different color from other selection items. Moreover, the display control unit 11 displays the name or the identification notation of the selection item of the second layer group "maintenance" displayed in the first selection screen 30 in a different color from other selection items and displays the name or the identification notation of the selection item of the third layer group "cumulative time of use" displayed in the second selection screen 40 in a different color from another selection item. Furthermore, among the function setting items displayed in the third selection screen 50, the display control unit 11 displays the names or the identification notations of the function setting items corresponding to the consumables for which the arrival of the maintenance times has been detected in a different color from other function setting items.

When the cumulative times of all consumables for which the arrival of the maintenance times has been detected are reset by the reset setting means of the reset setting screen 60a described above, the display control unit 11 cancels the notification of the arrival of the maintenance time and cancels the maintenance notation in the alarm notation column 13b. Moreover, the display control unit 11 cancels the visual recognition display by the selection means in the home screen 20, the first selection screen 30, the second selection screen 40, and the third selection screen 50. In the case where the arrival of the maintenance time has been detected for two or more consumables, in the third selection screen 50, the display control unit 11 may cancel the visual recognition display for each consumable for which the cumulative time has been reset.

As described above, according to the present embodiment, the display device 10 of the work machine 1 includes the storage unit 12 (storage means) that stores a cumulative time of use with respect to a consumable of the work machine 1 that requires maintenance depending on use. Moreover, the display control unit 11 and the display unit 13 included in the display device 10 function as a notification means that provides a notification of arrival of a maintenance time of the consumable on the basis of the cumulative time. Furthermore, the display control unit 11 and the display unit 13 function as a plurality of function setting means for respectively setting a plurality of functions of the work machine 1 and a selection means for selecting any of the plurality of function setting means. The plurality of function setting means has a reset setting means for resetting the cumulative time. The selection means performs visual recognition display that allows visual recognition of a procedure leading to the reset setting means regarding the consumable for which the maintenance time has arrived.

Accordingly, the display device 10 can have a worker who performs maintenance of the consumable for which the maintenance time has arrived visually recognize a procedure for resetting the cumulative time of use of the consumable. Therefore, it is possible to have the worker be aware of the need to reset the cumulative time of the consumable, and furthermore, it is possible to have the worker intuitively and easily understand an operation method for resetting the cumulative time. In addition, the cumulative time of the consumable after the maintenance can be measured more accurately by resetting the cumulative time after the maintenance of the consumable, so that the work machine 1 can be used more appropriately by using the consumable more appropriately.

Moreover, the selection means of the display device 10 is configured to hierarchize a procedure leading to the reset setting means. Accordingly, in a hierarchy to respectively select the plurality of function setting means, the display device 10 can lead to the reset setting means by selecting the plurality of function setting means in a stepwise fashion. Therefore, it is possible to select the reset setting means from a number of function setting means without hesitation, and it is possible to have the worker intuitively and easily understand the operation method for resetting the cumulative time of the consumable.

Furthermore, the selection means of the display device 10 is configured to perform visual recognition display for each hierarchy level. Accordingly, in a hierarchy to select any of the plurality of function setting means, the display device 10 performs visual recognition display continuously at each hierarchy level leading to the reset setting means, so that it is possible to have the worker intuitively and easily understand the operation method for resetting the cumulative time of the consumable.

Moreover, the reset setting means of the display device 10 is provided for each type of consumables at the lowest layer of the selection means. Accordingly, it is possible to have the worker intuitively and easily understand, among a plurality of consumables of the work machine 1, the consumable for which the maintenance time has arrived and the reset of the cumulative time is required.

In addition, the selection means of the display device 10 includes identification notations identifying options and is configured to display an identification notation of an option leading to the reset setting means in a different color from another option, as the visual recognition display. Accordingly, the display device 10 displays the option of the selection means leading to the reset setting means while being distinguished from the another option to perform the visual recognition display, so that it is possible to have the worker intuitively and easily understand the operation method for resetting the cumulative time of the consumable.

Moreover, the selection means of the display device 10 is configured to cancel the visual recognition display after resetting the cumulative time by the reset setting means. Accordingly, the display device 10 can have the worker intuitively and easily understand that the cumulative time has been reset for the maintained consumable.

In the above-described embodiment, an example in which the display control unit 11 measures the operating time of the engine 2 on the basis of the rotation speed of the engine 2 has been described, but the present invention is not limited to the example. For example, in another embodiment, the display control unit 11 may measure the operating time of the engine 2 on the basis of the fuel consumption or other information.

Moreover, in the above-described embodiment, an example in which the display control unit 11 measures the operating time of the hydraulic mechanism 4 on the basis of the detection result of the drive of the respective parts of the hydraulic mechanism 4 has been described, but the present invention is not limited to the example. For example, in another embodiment, the display control unit 11 may measure the operating time of the hydraulic mechanism 4 on the basis of the hydraulic pressure of the hydraulic oil in the hydraulic actuators, the flow rate of the hydraulic oil in the return flow path or the supply flow path, or other information.

In the above-described embodiment, an example in which the display control unit 11 measures the cumulative times of use of the hydraulic oil 4a, the hydraulic oil return filter 4b, and the hydraulic oil supply filter 4c on the basis of the operating time of the hydraulic mechanism 4 has been described, but the present invention is not limited to the example. For example, in another embodiment, the display control unit 11 may measure the cumulative times of the respective consumables from factors related to the respective consumables, for example, may measure the cumulative time of the hydraulic oil 4a on the basis of the drive of the hydraulic actuators or the hydraulic pressure of the hydraulic oil, may measure the cumulative time of the hydraulic oil return filter 4b on the basis of the drive of the return flow path or the flow rate of the hydraulic oil, and may measure the cumulative time of the hydraulic oil supply filter 4c on the basis of the drive of the supply flow path or the flow rate of the hydraulic oil.

In the above-described embodiment, an example in which the display device 10 classifies the plurality of functions of the work machine 1 (function setting means) into a hierarchy level of the first layer groups, a hierarchy level of the second layer groups, and a hierarchy level of the third layer groups has been described, but the present invention is not limited to the example. For example, in another embodiment, the display device 10 may classify the plurality of functions of the work machine 1 into two hierarchy levels or less, or four hierarchy levels or more. Moreover, the display device 10 may classify the plurality of functions of the work machine 1 in a different number of hierarchy levels depending on the type of function.

In the above-described embodiment, an example in which, as the visual recognition display, the display device 10 displays the notation related to the selection means leading to the reset setting means in a different color from other notations has been described, but the present invention is not limited to the example. For example, in another embodiment, as the visual recognition display, the display device 10 may display a background of the notation related to the selection means leading to the reset setting means in a different color from other notations. Moreover, in another embodiment, as the visual recognition display, the display device 10 may display the notation related to the selection means leading to the reset setting means differently from other notations by adding a character related to the reset of the cumulative time to change the name of the notation related to the selection means leading to the reset setting means. Alternatively, in another embodiment, as the visual recognition display, the display device 10 may display the notation related to the selection means leading to the reset setting means differently from other notations by blinking the notation related to the selection means leading to the reset setting means.

In the above-described embodiment, an example in which the display device 10 displays the reset setting screen 60a from the home screen 20 via the first selection screen 30, the second selection screen 40, and the third selection screen 50 has been described, but the present invention is not limited to the example. For example, in another embodiment, the display device 10 may display on the home screen 20 an operation key for displaying the reset setting screen 60a in a single operation when a notification of arrival of a maintenance time is provided in the home screen 20.

In the above-described embodiment, an example in which the operation unit 14 of the display device 10 is configured with the plurality of function keys has been described, but the present invention is not limited to the example. For example, in another embodiment, the operation unit 14 may be configured with a touch panel together with the display unit 13, and, in this case, a selection is made in response to a touch operation of the items displayed corresponding to the operation functions (for example, the selection items of the menu bar 13a). Alternatively, in another embodiment, the operation unit 14 may be configured with a jog dial, in this case, a candidate for the items displayed corresponding to the operation functions (for example, the selection items of the menu bar 13a) is changed in response to the rotation of the dial, and a selection decision of the candidate is made in response to an operation of a decision button of the dial. The candidate is preferably highlighted differently from other items.

In the above-described embodiment, an example in which the display device 10 monitors the cumulative times of use as usage information of the consumables of the work machine and resets the cumulative times in response to maintenance has been described, but the present invention is not limited to the example. For example, in another embodiment, the display device 10 may monitor other information such as the amount used of the consumables as usage information of the consumables of the work machine and may reset the information in response to maintenance.

### DESCRIPTION OF REFERENCE NUMERALS

1 work machine
2 engine
4 hydraulic mechanism
10 display device
11 display control unit
12 storage unit
13 display unit
14 operation unit
2a engine oil
2b engine oil filter
4a hydraulic oil
4b hydraulic oil return filter
4c hydraulic oil supply filter

## Claims

1. A display device (10) of a work machine (1), comprising:
a storage means (12) that stores a cumulative time of use with respect to a consumable of the work machine (1) that requires maintenance depending on use;
a notification means that provides a notification of arrival of a maintenance time of the consumable on the basis of the cumulative time;
a plurality of function setting means for respectively setting a plurality of functions of the work machine; and
a selection means for selecting any of the plurality of function setting means, wherein
the plurality of function setting means has a reset setting means for resetting the cumulative time, and
the selection means performs visual recognition display that allows visual recognition of a procedure leading to the reset setting means regarding the consumable for which the maintenance time has arrived, **characterized in that**
the selection means cancels the visual recognition display after resetting the cumulative time by the reset setting means.

2. The display device according to claim 1, wherein
the selection means hierarchizes the procedure leading to the reset setting means.

3. The display device according to claim 2, wherein
the selection means performs the visual recognition display for each hierarchy level.

4. The display device according to claim 2 or 3, wherein
the reset setting means is provided for each type of a plurality of the consumables at the lowest layer of the selection means.

5. The display device according to any one of claims 1 to 4, wherein
the selection means includes identification notations identifying options and displays an identification notation of an option leading to the reset setting means in a different color from another option, as the visual recognition display.

6. A work machine (1) including the display device (10) according to any one of claims 1 to 5.

## Patentansprüche

1. Anzeigevorrichtung (10) einer Arbeitsmaschine (1), umfassend:
eine Speichereinrichtung (12), die eine kumulierte Zeit der Verwendung in Bezug auf ein Verbrauchsmaterial der Arbeitsmaschine (1) speichert, das in Abhängigkeit von der Verwendung eine Wartung erfordert;
eine Benachrichtigungseinrichtung, die auf der Grundlage der kumulierten Zeit eine Benachrichtigung über das Eintreten einer Wartungszeit für das Verbrauchsmaterial bereitstellt;
eine Vielzahl von Funktionseinstelleinrichtungen zum jeweiligen Einstellen einer Vielzahl von Funktionen der Arbeitsmaschine; und
eine Auswahleinrichtung zum Auswählen einer beliebigen der Vielzahl von Funktionseinstelleinrichtungen, wobei
die Vielzahl der Funktionseinstelleinrichtungen eine Rücksetzeinrichtung zum Zurücksetzen der kumulierten Zeit aufweist und
die Auswahleinrichtung eine visuelle Erfassungsanzeige durchführt, die eine visuelle Erfassung einer Vorgehensweise ermöglicht, die zur Rücksetzeinrichtung hinsichtlich des Verbrauchsmaterials führt, für das der Wartungszeitpunkt eingetreten ist, **dadurch gekennzeichnet, dass**
die Auswahleinrichtung die visuelle Erfassungsanzeige nach dem Zurücksetzen der kumulierten Zeit durch die Rücksetzeinrichtung beendet.

2. Anzeigevorrichtung nach Anspruch 1, wobei
die Auswahleinrichtung die Vorgehensweise hierarchisiert, die zur Rücksetzeinrichtung führt.

3. Anzeigevorrichtung nach Anspruch 2, wobei
die Auswahleinrichtung die visuelle Erfassungsanzeige für jede Hierarchieebene durchführt.

4. Anzeigevorrichtung nach Anspruch 2 oder 3, wobei
die Rücksetzeinrichtung für jeden Typ einer Vielzahl von Verbrauchsmaterialien auf der untersten Ebene der Auswahleinrichtung bereitgestellt ist.

5. Anzeigevorrichtung nach einem der Ansprüche 1 bis 4, wobei
die Auswahleinrichtung Identifikationsvermerke zum Identifizieren von Optionen einschließt und einen Identifikationsvermerk einer Option anzeigt, die zur Rücksetzeinrichtung in einer von einer anderen Option unterschiedlichen Farbe als visuelle Erfassungsanzeige führt.

6. Arbeitsmaschine (1), die die Anzeigevorrichtung (10) nach einem der Ansprüche 1 bis 5 einschließt.

## Revendications

1. Dispositif d'affichage (10) d'une machine de travail (1) comprenant :
un moyen de stockage (12) qui stocke un temps cumulé d'utilisation par rapport à un consommable de la machine de travail (1) qui nécessite une maintenance en fonction d'une utilisation ;
un moyen de notification qui fournit une notification d'arrivée d'un temps de maintenance du consommable sur la base du temps cumulé ;
une pluralité de moyens de réglage de fonction pour régler respectivement une pluralité de fonctions de la machine de travail ; et
un moyen de sélection pour sélectionner l'un quelconque de la pluralité de moyens de réglage de fonction, dans lequel
la pluralité de moyens réglage de fonction présente un moyen de réglage de réinitialisation pour réinitialiser le temps cumulé, et
le moyen de sélection effectue un affichage de reconnaissance visuelle qui permet une reconnaissance visuelle d'une procédure menant au moyen de réglage de réinitialisation concernant le consommable pour lequel le temps de maintenance est arrivé, **caractérisé en ce que**
le moyen de sélection annule l'affichage de reconnaissance visuelle après réinitialisation du temps cumulé par le moyen de réglage de réinitialisation.

2. Dispositif d'affichage selon la revendication 1, dans lequel
le moyen de sélection hiérarchise la procédure menant au moyen de réglage de réinitialisation.

3. Dispositif d'affichage selon la revendication 2, dans lequel
le moyen de sélection effectue l'affichage de reconnaissance visuelle pour chaque niveau de hiérarchie.

4. Dispositif d'affichage selon la revendication 2 ou 3, dans lequel
le moyen de réglage de réinitialisation est fourni pour chaque type d'une pluralité des consommables au niveau de la couche la plus basse des moyens de sélection.

5. Dispositif d'affichage selon l'une quelconque des revendications 1 à 4, dans lequel
le moyen de sélection inclut des notations d'identification identifiant des options, et affiche une notation d'identification d'une option menant au moyen de réglage de réinitialisation dans une couleur différente d'une autre option, en tant qu'affichage de reconnaissance visuelle.

6. Machine de travail (1) incluant le dispositif d'affichage (10) selon l'une quelconque des revendications 1 à 5.
